Europäisches Patentamt

European Patent Office

Office européen des brevets

(11) Publication number: **0 504 773 A1**

# EUROPEAN PATENT APPLICATION

(21) Application number: **92104498.8**

(22) Date of filing: **16.03.92**

(51) Int. Cl.5: **A61J 3/00, A23G 3/26**

Priority 200391 IT MI91000227.

(30) Priority: **20.03.91**

(43) Date of publication of application:
**23.09.92 Bulletin 92/39**

(84) Designated Contracting States:
**DE ES IT**

(71) Applicant: **VELO S.p.A.**
**Via Piave 55**
**I-31030 Altivole (Treviso)(IT)**

(72) Inventor: **Velo, Antonio**
**Via Madonette, 38**
**I-31031 Caerano San Marco (Treviso)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Device for coating tablets or microgranules.

(57) The device for coating tablets or microgranules includes a reversably rotatable drum (5) having a cylindrical ring (13) and two opposite frustum-shaped domes (16,17) provided with axial openings (17,18). Curved blades (19) are internally provided inside the domes which extend between the openings and the cylindrical ring in order to either send tablets back to the cylindrical ring or out of the openings depending on the direction of rotation of the drum.

FIG.1

The present invention relates to a device particularly usable for coating tablets or microgranules.

Devices are currently known which are suitable for coating tablets or microgranules for their use in the confectionery or pharmaceutical field.

It is known to use, for this purpose, devices composed of a drum or container which is perforated or not and in which the tablets or microgranules to be coated are introduced together with the coating product.

The drum is rotated by means of a motor with adapted transmissions, so as to keep the mass formed by the tablets or microgranules in motion inside the drum; this operation is facilitated by the presence of adapted baffles arranged inside said drum.

Rotation is performed about a fixed hollow shaft, inside which air is caused to flow; by means of appropriate perforated vanes arranged inside the drum, the air flow is brought into contact with the tablets or microgranules, thus making the aqueous part of the coating evaporate in order to dry said coating on the tablet or granule.

Once the drying step has ended, the tablets or microgranules must be removed from the drum; this is currently performed manually or by using tools such as shovels or, in the case of the final removal of the product accumulated at the bottom of the drum, with spatulas.

This operation has several problems, due to the need to have specific personnel assigned to perform it, due to the difficulty the operator has in introducing his hands or tools inside the drum to remove the dried material, and due to possible contamination of the dried product.

A loss of dried product due to falling during removal from the drum is also observed.

It is furthermore known to remove the dried product by using a tube which is coupled to an open end of the drum: when part of the dried product is pushed, due to centrifugal force, proximate to the opening of said drum, the tube internally collects it and conveys it outward.

Even this solution is not free from disadvantages, since it is observed that the amount of tablets or microgranules which is conveyed into the tube is limited; additionally, a residue remains in the drum which must be removed manually.

The aim of the present invention is therefore to eliminate the disadvantages described above in known types by providing a device which allows to achieve complete and optimum unloading of the tablets or microgranules from the drum.

Within the scope of the above aim, an important object is to provide a device which allows to automatically unload the tablets or microgranules from the drum without requiring personnel assigned to this operation.

Another important object is to provide a device which is structurally simple and easy to use and industrialize.

Another important object is to provide a device which allows the complete unloading of the mass of tablets even in the absence of personnel assigned to this operation.

Another important object is to provide a device which allows to unload the tablets or microgranules so that they cannot be contaminated or lost during unloading.

Not least object is to provide a device which is reliable and safe in use and has modest manufacturing costs.

This aim, these objects and others which will become apparent hereinafter, are achieved by a device for coating tablets or microgranules, comprising a drum having a substantially cylindrical ring which is internally provided with a plurality of baffles for mixing said tablets or microgranules, and having at least one substantially frustum-shaped dome associated with an end of said ring, said dome being provided with an opening arranged opposite to said end, said device further comprising means for rotating in two directions said drum about an axis thereof and one or more curved blades which are associated inside said dome, said curved blades extending from said end to said opening.

Further characteristics and advantages of the invention will become apparent from the detailed description of a particular embodiment, illustrated only by way of nonlimitative example in the accompanying drawings, wherein:

figure 1 is a partially sectional perspective view of a preferred embodiment of the device according to the present invention;

figure 2 is a view of the device taken along the sectional plane II-II of figure 1.

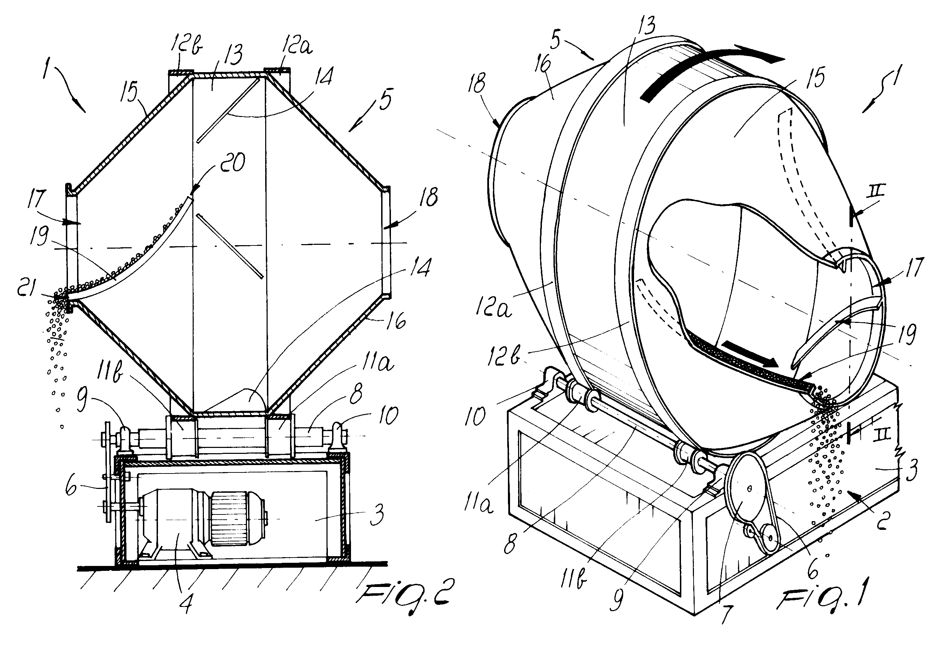

With reference to the above figures, the reference numeral 1 generally designates the device suitable for coating tablets or microgranules 2; said device comprises a box-like base 3 which has a parallelepipedal shape and in which a motor 4 is accommodated for rotating a drum 5 by means of an adapted toothed belt 6 which interacts with a pulley 7 which is keyed to a shaft 8 which is freely pivoted, at its ends, to a pair of supports 9 and 10 which are associated with an upper side of the box-like base 3.

A pair of sleeves 11a and 11b is rigidly associated coaxially to the shaft 8; said sleeves are suitable for transmitting motion to a pair of strips 12a and 12b which interact with said sleeves and are associated with, and protrude from, the outer lateral surface of a cylindrical ring 13 of the drum 5.

A plurality of straight baffles 14 protrudes inside the ring 13; said baffles are arranged at different angles and mix the mass constituted by the tablets during the rotation of the drum.

A first dome and a second dome, designated by the numerals 15 and 16, are associated at the ends of the ring 13; said domes have a frustum-like shape, and a first circular opening and a second circular opening, designated by the numerals 17 and 18, are provided at the free smaller planar faces.

One or more curved blades 19 are associated with, and protrude from, at least the inner surface of the first dome 15, and each blade has a first end 20 and a second end 21 which are connected respectively to the larger planar face and to the smaller planar face of said first dome 15; said blades have a curved configuration which is such that, assuming that the mixing rotation direction is counterclockwise, the curved blades tend to mix the tablets and push them toward the inside of the drum.

Once a rotation direction which is opposite to the one required for mixing has been imparted to the drum, the blades, by virtue of their curved configuration, tend to collect the tablets during rotation, starting from the bottom of the drum, performing a "spoon-like" collection thereof.

The tablets thus rest on the blades, which support them, and are then conveyed outside the opening 17 when said blades are arranged approximately at the condition illustrated in the accompanying figures.

The operation of the device for coating tablets or microgranules in fact provides, once the drum 5 has been filled and once its contents have been mixed and dried, a reversal of the rotary motion of said drum, so as to make the curved blades change their function: from means for retaining and conveying the tablets inside the drum to means for conveying the tablets outside the drum through the opening 17.

In this case, the curved blades in fact remove the tablets right from the bottom of the drum, conveying them from the first end 20 to the second end 21 and, by gravity, outside the drum.

It has thus been observed that the invention has achieved the intended aim and objects, a device for coating tablets and microgranules having been obtained which achieves a complete and optimum unloading of the contents of the drum, all without the aid of personnel and in a reduced amount of time.

The invention is furthermore structurally simple and easy to use and industrialize, and also allows to unload the tablets or microgranules without the possibility of contaminating or losing them during unloading.

Finally, the invention is rapidly and easily applicable to known drums as well, and by virtue of its simplicity is reliable and safe in use and has modest manufacturing costs.

The number, shape, length and inclination of the blades may naturally be the most pertinent according to the specific requirements; thus, the materials and the dimensions which constitute the individual components of the invention may also be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for coating tablets or microgranules, comprising a drum (5) having a substantially cylindrical ring (13) which is internally provided with a plurality of baffles (14) for mixing said tablets or microgranules, and having at least one substantially frustum-shaped dome (16,17) associated with an end of said ring, said dome being provided with an opening (17,18) arranged opposite to said end, said device further comprising means for rotating in two directions said drum about an axis thereof and one or more curved blades (19) which are associated inside said dome, said curved blades extending from said end to said opening.

2. Device according to claim 1, characterized in that it comprises a first dome (16) and a second dome (17) connected at opposite ends of said cylindrical ring.

3. Device according to claim 1, characterized in that said means for rotating said drum comprise a reversable motor (6), a freely pivoted shaft (8), cylindrical strips (12a,12b) connected to said cylindrical ring, cylindrical sleeves (11a,11b) rigidly connected to said shaft and in engagement with said strips, and transmission elements (6,7) interconnected between said motor and said shaft.

FIG.2

FIG.1

EP 0 504 773 A1

European Patent Office

# EUROPEAN SEARCH REPORT

Application Number

EP 92 10 4498

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 438 353 (PELLEGRINI)<br>* column 2, line 7 - line 47; figures * | 1-3 | A61J3/00<br>A23G3/26 |
| A | US-A-4 674 198 (HÜTTLIN)<br>* column 4, line 44 - line 49; figures * | 1 | |
| A | FR-A-2 251 270 (DUMOULIN & CIE)<br>* claims; figures * | 1 | |
| A | FR-A-726 959 (RICHIER)<br>* page 2, line 6 - line 18; figures * | 1-3 | |
| | ----- | | TECHNICAL FIELDS SEARCHED (Int. Cl.5)<br><br>A61J<br>A23G<br>B28C |

The present search report has been drawn up for all claims

| Place of search | Date of completion of the search | Examiner |
|---|---|---|
| THE HAGUE | 11 MAY 1992 | GODOT T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document